# EUROPEAN PATENT APPLICATION

(11) **EP 3 730 863 A1**
(43) Date of publication of application: **28.10.2020**
(21) Application number: 20161468.2
(22) Date of filing: 06.03.2020
(51) Int. Cl.: F24S 25/61, F24S 25/636, F24S 25/35

(54) **SOLAR PANEL FIXTURE ELEMENT OF A SOLAR PANEL SYSTEM, A SOLAR PANEL SYSTEM AND A METHOD OF MOUNTING OF SOLAR PANELS OF A SOLAR PANEL SYSTEM**

(30) Priority: 24.04.2019 FI 20195328
(71) Applicant: Orima-Tuote OY, 16300 Orimattila (FI)
(72) Inventor: INKINEN, Tomi-Tuomas, 15860 Hollola (FI); MÄENMAA, Tony, 16300 Orimattila (FI)
(74) Representative: Berggren Oy, Helsinki & Oulu

(57) **Abstract**

The invention relates to a solar panel fixture element of a solar panel system, which has a first fixing side (10A) and a second fixing side (10B), which solar panel fixture element (10) comprises two parallelly extending two main elements (11A, 11B), which are located centrally spaced apart from each other, and between the centrally and parallelly extending two main elements (11A, 11B) is formed cross elements (13, 14, 23, 24), which extend between the first main element (11A) and the second main element (11B). Each fixing side (10A, 10B) is formed outwards from centrally and parallelly extending two main elements (11A, 11B) and the solar panel fixture element (10) has on each fixing side (10A, 10B) from the corresponding main element (11A, 11B) extending upper support elements (15A, 15B) and lower support elements (16A, 16B). Between the upper support element (15A, 15B) and corresponding lower support element (16A, 16B) a mounting groove (20A, 20B) of corresponding fixing side is formed and in the solar panel fixture element (10) the mounting groove (20A) on the first fixing side (10A) is differently dimensioned than the mounting groove (20B) on the second fixing side (10B).

## Description

The invention relates to fastening of solar panels in a solar panel system. The invention also relates to a solar panel system. The invention also relates to a method of mounting of a solar panel system. More particularly the invention relates to a solar panel fixture element of a solar panel system according to the preamble of the independent solar panel fixture element of a solar panel system claim. More particularly the invention relates to a solar panel system according to the preamble of the independent solar panel system claim. More particularly the invention relates to a method of mounting of solar panels of a solar panel system according to the preamble of the independent method claim.

Solar energy utilization is in present days widely used and increasingly popular. The solar energy is collected by solar panels, which typically are used as solar panel systems formed of a group/-s of several panels mounted on supporting structures in a sunny location and panels oriented towards the sun in order to collect as much solar energy as possible. In the solar panel systems, the solar panels are typically mounted as roof systems or as solar energy parks with foundations and support structures on ground.

When new sites for solar panel system are founded, mounting work of the solar panels and their support and fastening structures and elements play a significant role. Often in the mounting work there are work stages that require more than one assemblers due to work stages, which are not possible to do by one assembler, only. For example, moving the large solar panels to their places for mounting and holding and positioning the large solar panels typically need at least one assembler for the solar panel and at least one assembler for the actual fastening work. The mounting work is often also done in cumbersome working positions, that may cause work-related musculoskeletal disorders. As in the solar panel systems, especially in those located in solar energy parks, where mounting and fastening stages of a solar panel are repeated even tens of thousands of times, work related to each fastening stage and fastening element is enhanced.

It is known from prior art to use solar panel mounting systems, in which the solar panels are mounted into fastening grooves of fastening profiles extending on each side of the solar panel by drawing them at end of the solar panel line and thus the profiles can be positioned and tightened to only after the solar panels have been mounted or alternatively different tolerance devices are used to secure the fastening.

An object of the present invention is to provide an improved solar panel fixture element of a solar panel system, a solar panel system and a method of mounting of solar panels of a solar panel system, in which the problems and disadvantages of solutions known from prior art are eliminated or at least minimized.

An object of the invention is to provide a solar panel fixture element of a solar panel system, a solar panel system and a method of mounting of solar panels of a solar panel system, which minimizes the need of time and work in mounting and fastening solar panels to the solar panel system independent of size or manufacturer of the solar panels.

An object of the invention is to provide a solar panel fixture element of a solar panel system, a solar panel system and a method of mounting of solar panels of a solar panel system, which minimizes the need of more than one assembler in mounting and fastening one solar panel to the solar panel system.

A further object of the invention is to create a solar panel fixture element of a solar panel system, a solar panel system and a method of mounting of solar panels of a solar panel system, which minimizes the mounting time and maximizes the easiness of the mounting work and in which needs of different types of mounting fasteners and like as well as work stages are minimized.

One particular, non-necessary object of the invention is to create a solar panel fixture element of a solar panel system, a solar panel system and a method of mounting of solar panels of a solar panel system, in which mounting work can be done at low height level.

In order to achieve the above objects and those that will come apparent later the solar panel fixture element of a solar panel system according to the invention is mainly characterized by the features of the characterizing part of the independent solar panel fixture element of a solar panel system claim. The solar panel system, in turn, is mainly characterized by the features of the characterizing part of the independent solar panel system claim and the method of mounting of solar panels of a solar panel system is mainly characterized by the features of the characterizing part of the independent method claim. Advantageous embodiments and features are defined in dependent claims.

According to the invention the solar panel fixture element of a solar panel system has a first fixing side and a second fixing side, comprises two parallelly extending two main elements, which main elements are located centrally spaced apart from each other, between the centrally and parallelly extending two main elements is formed cross elements, which cross elements extend between the first main element and the second main element, wherein each fixing side is formed outwards from centrally and parallelly extending two main elements, and the solar panel fixture element has on each fixing side from the corresponding main element upper support elements and lower support elements, wherein between the upper support element and corresponding lower support element a mounting groove of corresponding fixing side is formed.

According to the invention the lower support elements have a tightening protrusion at their outermost ends, which tightening protrusion extends upwards from the corresponding lower support elements and are controllably bendable as the solar panel is mounted. Thus, final positioning and tightening of the solar panels is advantageously achieved by gravity and the "controlled" deformation of the tightening protrusion.

According to an advantageous feature of the invention the main elements and the cross elements form a support and fastening frame structure for the solar panel fixture element.

According to an advantageous feature of the invention lower support elements are slightly inclined towards the upper support elements i.e. towards the mounting grooves, advantageously 3-8 degrees, more advantageously about 5 degrees, and/or the upper support elements (are slightly inclined towards the lower support elements i.e. towards the mounting grooves, advantageously 0,5-2,5 degrees, more advantageously about 1,5 degrees. Thus, when one end of the solar panel is in the mounting groove of a fixture element and the other end on support of the corresponding support elements of the next fixture element, the solar panel is not parallel to the fastening legs of the fixture elements.

According to an advantageous feature of the invention the two upper cross elements are perpendicular to the main elements and form an opening limited by the cross elements and the parts of the main elements extending between the cross elements, which opening is for a joint piece to connect two next to each other located solar panel fixture elements to each other in longitudinal direction.

According to an advantageous feature of the invention at one end of the main elements a clamping groove of the solar panel fixture element is formed.

According to an advantageous feature of the invention the solar panel fixture element comprises on each fixing side fastening legs extending from the main elements outwards and that the fastening legs have upward extending corner elements.

According to an advantageous feature of the invention the solar panel fixture element is an extruded aluminum profile. The material of the solar panel fixture element can also be other extrudable metallic material or other material, such as a polymeric or composite material.

According to an advantageous feature of the invention in the solar panel fixture element the mounting groove on the first fixing side is differently dimensioned than the mounting groove on the second fixing side.

According to the invention the solar panel system comprises solar panels and a support and fastening structure, and the solar panel system further comprises solar panel fixture elements according to the invention and the solar panels are fastened to the support and fastening structure by the solar panel fixture elements.

According to the invention in the method of mounting of solar panels of a solar panel system the solar panels are fastened to a support and fastening structure of the solar panel system by solar panel fixture elements according to the invention.

According to the invention in the method end sides of two next to each other located solar panels are fastened to one solar panel fixture element on the upper support structures correspondingly on the first fixing side and on the second fixing side and the opposite end side of each solar panel is fastened to another solar panel fixture elements such, that the end sides of the solar panels are supported by the lower support structures and fastened to the mounting groove on either fixing side depending on the thickness of the solar panel.

Thus, by the present invention relating to the solar panel fixture element of the solar panel system, the solar panel system and the method of mounting of solar panels of a solar panel system the time needed for the mounting work or the solar panel is decreased, as well as the mounting work ergonomics are improved, whereby cost savings are achieved with simultaneous improvements in the pleasantness and easiness of the work.

The solar panel fixture element of the solar panel system can be used in connection with roof system installations and with installations for solar energy parks with corresponding installations, in which several solar panels located in a row/-s and a column/-s are forming a solar panel system. The solar panel fixture element of the solar panel system can be used in connection with different types of support and fastening structures for solar panel systems.

When the solar panel fixture element of the solar panel system, the solar panel system and the method of mounting of solar panels of a solar panel system according to the invention is used, other support and fastening structures can be mounted and fastened in their locations as well as the solar panel fixture element according to the invention can be positioned and fastened in connection with the other support and fastening structures before the solar panels are installed into their places in the solar panel system. Therefore, the mounting work is fast and easy, as no need to avoid the solar panel itself exists during the installation of the support and fastening structures and the solar panel fixture element. Accordingly, when the support and fastening structures and the solar panel fixture element are mounted in their places, the solar panels are just lifted and placed in connection with the corresponding solar panel fixture elements. As the solar panels are placed at its place in the solar panel fixture elements, they are automatically positioned due to the technical forms of the solar panel fixture elements and they also stay in their place without the assembler holding grip and thus, the assembler is free to set in places and fasten the solar panel with the fastening members, such as quick clamping devices for solar panels, known as such in the art, or by hammer head screws, known as such in the art. The quick clamping devices can be placed in connection with a clamping groove of the solar panel fixture element. Depending on wind conditions of the solar system location, typically to fasten two solar panels next to each other in the solar panel fixture element only one to two screws need to be tightened or two clamping means need to be fastened. In ideal situation only one panel clamp and tightening of only one screw is needed for securing two panels.

The solar panel fixture element is made of a suitable material in view of the durability, strength etc. Advantageously, the solar panel fixture element is made of aluminum as an extruded profile. Alternatively, the material of the solar panel fixture element can be polymeric or composite material. The structure of the solar panel fixture element according to the invention also optimizes the material amount need in view of the strength and durability in the environment, for example in view of wind conditions or snow load. In case the solar panel fixture element is used in connection with the support structures, for example in a solar energy park or for example in a roof system, by using the solar panel fixture element in accordance with the invention also long distance between the support legs, i.e. long bearing distance can be used.

As for example the ground support legs of the support structures for the solar panel system in a solar energy parks are typically expensive and arduous to mount, by the solar panel fixture element according to the invention also significant indirect advantages in the overall mounting work and speed are achieved.

The solar panel fixture element according to the invention being asymmetrical also provides advantages. The mounting groove of the first side and the mounting groove of the second side are to be used for solar panels with different thickness. The first side being most advantageously suitable for a solar panel with 40 mm thickness and the second side being most advantageously suitable for a solar pane of 35 mm thickness. These two thicknesses of solar panels are the most widely used. Naturally, the dimensioning of the solar panel fixture element can easily be altered to be suitable for other two thickness measurements. Thus, by the one solar panel fixture element according to the invention actually two fastening product sizes can be replaced. This also provides for the possibility of altering the solar panel thickness type even in the middle of the mounting project, in case for example limited availability of the earlier selected thickness size.

The solar panel fixture element according to the invention is also utilizable irrespective of the size of the solar panel, the width and the height of the solar panel can alter almost limitless.

The mounting distance of the solar panel fixture elements is determined based on the solar panel measurements and based on the support and fastening structures of the solar panel system.

In the following the invention is described in more detail by reference to the accompanying drawing in which
Fig. 1 shows schematically an example of a solar panel fixture element of a solar panel system according to one advantageous example of the invention.
Fig. 2 shows schematically one example of fastening solar panels by the solar panel fixture element and of fastening the solar panel fixture element.
Fig. 3 shows schematically another example of fastening the solar panel fixture element.
Fig. 4 shows schematically one example of fastening two next to each other located solar panels by the solar panel fixture element.
Figs. 5A - 5C show schematically in more detailed view the fixture profile areas of the example of the figure 4.
Fig. 6 shows schematically an example of a part of a solar panel system of a solar energy park.

During the course of the following description corresponding reference numbers and signs will be used to identify corresponding elements, parts and part components unless otherwise mentioned. In the figures some references sign have not been repeated or have been omitted for clarity reasons. In the following the example is described mainly by reference to one example of a solar panel fixture element of a solar panel system in view of simplifying the disclosure but it should be noted that instead of the example any corresponding type of a solar panel fixture element of a solar panel system can have similar features and properties in accordance with the invention. In this description terms upper, lower, vertical, horizontal etc. have been used to help the reader and only in view of the figures. These terms have no relation to actual position of respective devices, part, part-elements etc., when those in actual usage.

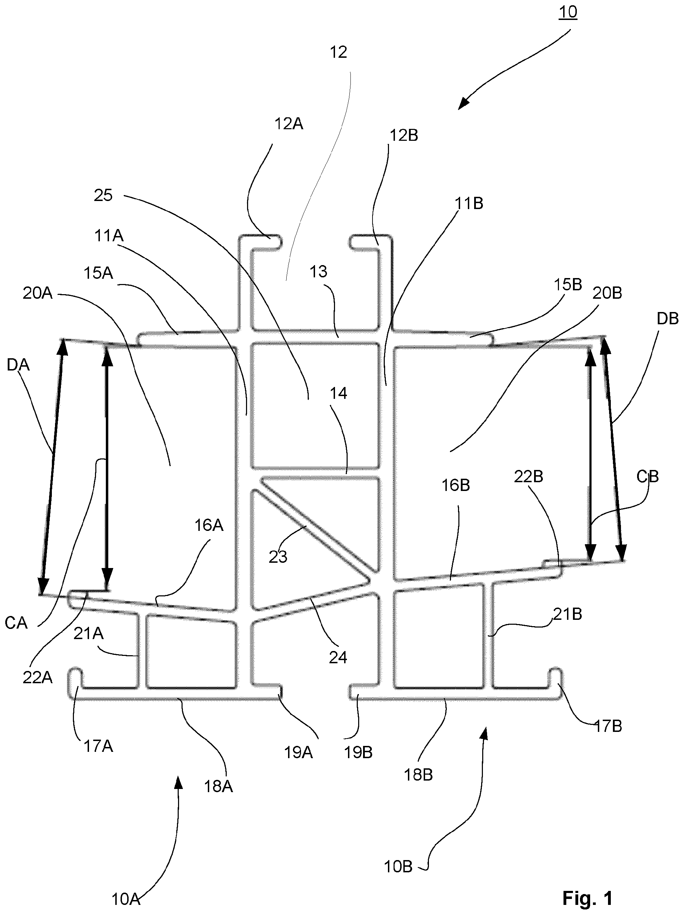

In figure 1 is shown schematically an example of a solar panel fixture element 10 of a solar panel system. In the figure 1 a cross view of the solar panel fixture element 10 is shown and the solar panel fixture element 10 extends in longitudinal direction i.e. in perpendicular direction of the figure. The solar panel fixture element 10 is most advantageously an extruded aluminum profile. The solar panel fixture element 10 is asymmetrical and has thus a first fixing side 10A and a second fixing side 10B. Each fixing side 10A, 10B is formed outwards from centrally and parallelly extending two main elements 11A, 11B. Between the centrally and parallelly extending two main elements 11A, 11B cross elements 13, 14, 23, 24, which extend between the first main element 11A and the second main element 11B, are formed. The two upper cross elements 13, 14 are advantageously perpendicular to the main elements 11A, 11B and form an opening 25 limited by the cross elements 13, 14 and the parts of the main elements 11A, 11B located between the cross elements 13, 14. The opening 25 of the solar panel fixture element 10 is for a joint piece (not shown) to connect two next to each other located solar panel fixture elements 10 to each other in longitudinal direction of the solar panel fixture element. Thus, for connecting the solar panel fixture elements 19 together in longitudinal direction no screws of like tool operated devices are needed. The main elements 11A, 11B and the cross elements 13, 14, 23, 24 form the support frame structure for the solar panel fixture element 10. The cross elements 23, 24 may be inclined to improve strength of the solar panel fixture element 10 as can be seen from the figure.

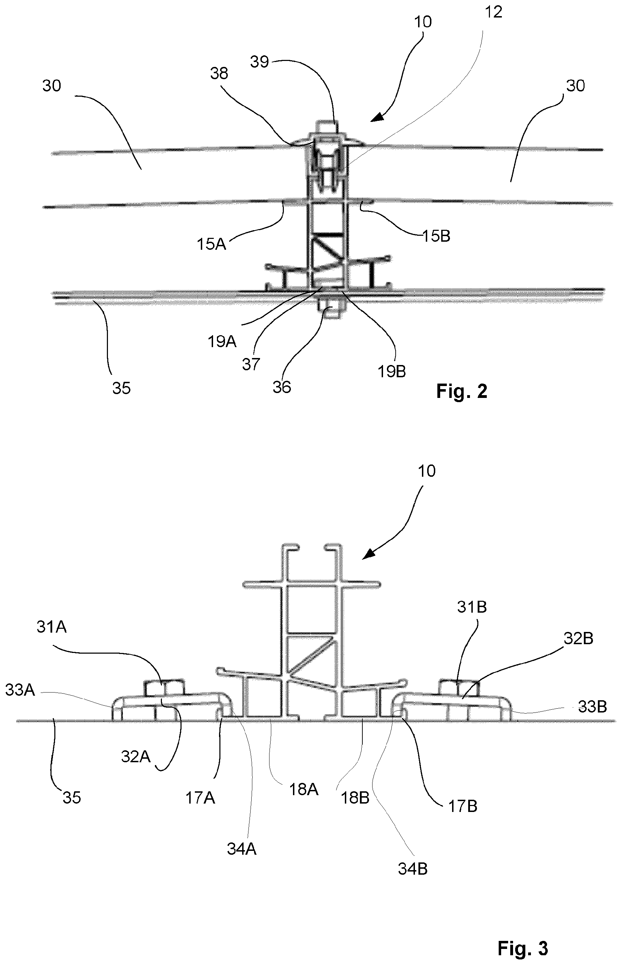

At one end of the main elements 11A, 11B a clamping groove 12 of the solar panel fixture element 10 is formed and limited by the ends of the main elements 11A, 11B and inwards i.e. towards the imaginary longitudinal center line of the solar panel fixture element 10 turned and extending extension parts 12A, 12B. In between the extension parts 12A, 12B an opening is located for the fastening members 38, 39 (fig. 2), such as quick clamping devices for solar panels or by hammer head screws.

The solar panel fixture element 10 has on each fixing side 10A, 10B from the corresponding main element 11A, 11B extending upper support elements 15A, 15B and lower support elements 16A, 16B. The outer ends of the upper and lower support elements 15A, 15B, 16A, 16B are closer to each other than the inner ends of the upper and lower support elements 15A, 15B, 16A, 16B i.e. the ends of the upper and lower support elements 15A, 15B, 16A, 16B connected to the main elements 11A, 11B. Thus, the lower support elements 16A, 16B are slightly inclined upwards i.e. towards the upper support elements 15A, 15B i.e. towards the mounting grooves 20A, 20B, advantageously 3-8 degrees, more advantageously about 5 degrees, and/or the upper support elements 15A, 15B are slightly inclined downwards i.e. towards the lower support elements 16A, 16B i.e. towards the mounting grooves 20A, 20B, advantageously 0,5-2,5 degrees, more advantageously about 1,5 degrees. Thus, when one end of the solar panel is in the mounting groove 20A, 20B and the other end on support of the corresponding support elements 15A, 15B of the next fixture element 10, the solar panel is not parallel to the fastening legs 18A, 18B.

The lower support elements 16A, 16B have a tightening protrusion 22A, 22B at their outermost ends, which tightening protrusions 22A, 22B extend upwards from the lower support elements 16A, 16B. In between the upper support element 15A, 15B and corresponding lower support element 16A, 16B a mounting groove 20A, 20B is formed for fastening an end side of a solar panel. Another, opposite to the former, end side of a next to the former located solar panel is supported on the upper support element 15A, 15B. As can be seen form the figure the solar panel fixture element 10 has on each fixing side 10A, 10B differently dimensioned mounting grooves 20A, 20B in this example. The mounting groove 20A of the first fixing side 10A and the mounting groove 20B of the second fixing side 10B are to be used for solar panels with different thickness. The first fixing side 10A being most advantageously suitable for a solar panel with 40 mm thickness and the second fixing side 10B being most advantageously suitable for a solar panel of 35 mm thickness. The mounting grooves 20A, 20B may also have same dimensions, when the solar panel fixture element 10 is used for mounting solar panels with same thickness.

The solar panel fixture element 10 comprises on each fixing side 10A, 10B fastening legs 18A, 18B extending from the main elements 11A, 11B outwards and as fixing extensions 19A, 19B towards the imaginary longitudinal center line of the solar panel fixture element 10. The fastening legs 18A, 18B have upward extending corner elements 17A, 17B. Either the fixing extensions 19A, 19B or the corner elements 17A, 17B can be used to fasten the solar panel fixture element 10 to the support and fastening structure 35, 40, 41, 42, 43 of the solar panel system. The fixing extensions 19A, 19B for hammer head screw fastening 37, 38 (fig. 2) and the corner elements 17A, 17B for fastening claw fastening 31A-34A; 31B-34B (fig. 3).

The mounting grooves 20A, 20B on each fixing side 10A, 10B of the solar panel fixture element 10 are dimensioned such that an end side of a solar panel can be brought into the mounting groove 20A, 20B in slightly angled position, as shown by measurements DA and DB. When the solar panel is by gravity turned to its use position onto the support of the lower support elements 16A, 16B, the solar panel is locked into the mounting groove 20A, 20B tightly. When the solar panel is turned the tightening protrusion 22A, 22B bends such that the solar panel will be locked into the mounting groove 20A, 20B as can be seen from measurements CA, CB. Thus, the locking effect is based on controlled deformation of the solar panel fixture element 10 and no further means, such as wedges, fastening means or pressing of the elements towards each other is needed. The measurements DA, CA on the first fixing side 10A for a typical solar panel with 40 mm thickness are DA is 41,4 mm and CA is 39,5 mm. The measurements DB, CB on the second fixing side for a typical solar panel with 35 mm thickness are DA is 36,4 mm and CA is 34,5 mm. Correspondingly, the mounting grooves 20A, 20B can be dimensioned for solar panels of other thickness measurements.

In figure 2 is shown an example of fastening solar panels 30 by the solar panel fixture element 10 and of fastening the solar panel fixture element 10 to the support and fastening structure 35, 40, 41, 42, 43 of the solar panel system. In the example of figure 2 end sides of two next to each other located solar panels 30 are fastened to the solar panel fixture element 10. The end sides of the solar panels 30 are located on the upper support structures 15A, 15B correspondingly on the first fixing side 10A and on the second fixing side 10B. The fastening members 38, 39 are connected and fastened to the clamping groove 12. The fastening members 38, 39 comprise for example a of sheet metal or of an aluminum profile made clamp part 38 with on the solar panel 30 extending arms, that is fastened to the clamping groove by a fastening device 39, for example by a quick clamping device or by a hammer head screw. The clamp part 38 may also be coniform such, that when the fixture element 10 is located in between two next to each other situated solar panels by tightening the conical form forces the arms outwards from each other and provides the arm with even greater strength against the solar panel fixture element 10. In the example of the figure 2 the solar panel fixture element 10 is fastened to the corresponding part 35 of to the support and fastening structure 35, 40, 41, 42, 43 of the solar panel system by a hammer head screw fastening 36, 37 fastened in connection with the fixing extensions 19A, 19B of the solar panel fixture element 10.

Fig. 3 shows schematically another example of fastening the solar panel fixture element, in which the solar panel fixture element 10 is fastened to the corresponding part 35 of to the support and fastening structure 35, 40, 41, 42, 43 of the solar panel system by fastening claw fastenings 31A-34A; 31B-34B fastened in connection with the corner elements 17A, 17B on each fixing side 10A, 10B of the solar panel fixture element 10.

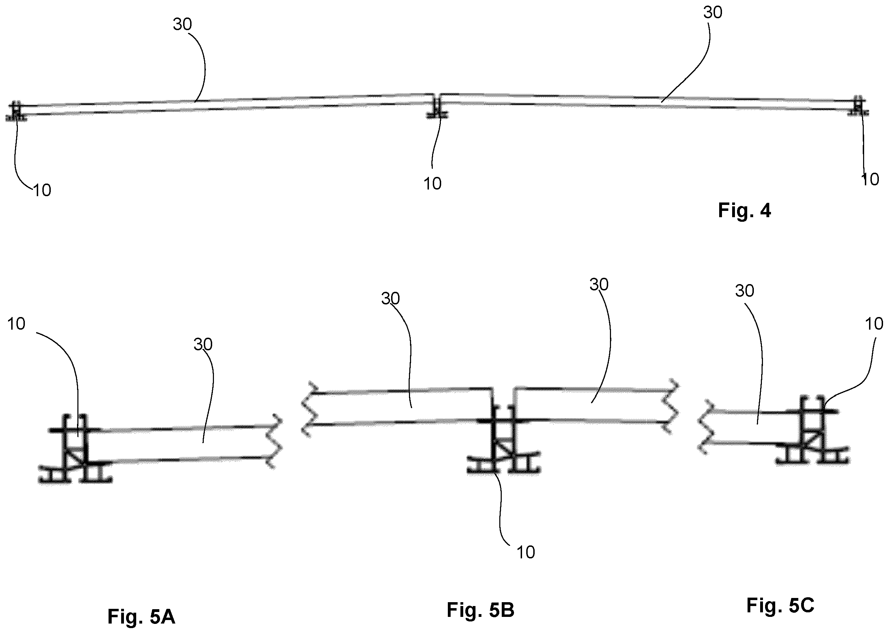

In figure 4 and in figures 5A - 5C in more detailed view of the fixture profile areas is shown example of fastening two next to each other located solar panels 30 by the solar panel fixture elements 10. In the figure to the middle solar panel fixture both solar panels 30 are fastened such, that the end sides of the solar panels 30 are in support of the upper support structures 15A, 15B and fastened thereto by fastening members, for example in accordance with the example of figure 2. The opposite end side of each solar panel 30 is fastened to the corresponding outermost solar panel fixture element 10 such, that the end sides of the solar panels 30 are supported by the lower support structures 16A, 16B and fastened to the mounting groove 20A or 20B depending on the thickness of the solar panel 30. When the solar panel is by gravity turned to its use position onto the support of the lower support elements 16A, 16B, the solar panel is locked into the mounting groove 20A, 20B tightly based on controlled deformation of the solar panel fixture element 10 as explained in connection with the description of figure 1. Thus, as can be seen from the figures in a solar panel system, where the solar panel fixture elements 10 in accordance with the invention are used one end side of the solar panel 30 is at a higher level than the other end side of the solar panel 30 due to the placement of the one end sides of the solar panel to support of the upper support elements 15A, 15B and the placement of the other end sides of the solar panel 30 to support of the lower support elements 16A, 16B.

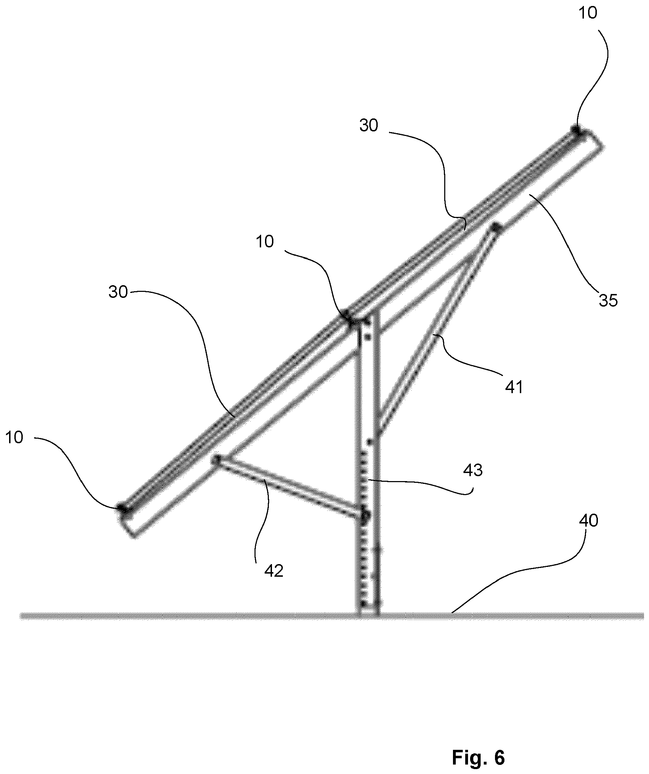

Fig. 6 shows schematically an example of a part of a solar panel system of a solar energy park. The support and fastening structure 35, 40, 41, 42, 43 of the solar panel system supports the solar panels 30 attached by the solar panel fixture elements 10 to the first part 35 of the support and fastening structure 35, 40, 41, 42, 43. Further parts 41, 42, 43 of the support and fastening structure 35, 40, 41, 42, 43 are to place the solar panels 30 desired position in view of the sun shine and thus to receive the optimal amount of solar energy and support the solar panels 30 via the first part 35 to the supporting surface 40, for example a base structure or a roof or ground surface. In this example the diagonal parts 41, 42 are adjustably attached to the vertical part 43 and thus the angle of the solar panels 30 is adjustable. The vertical part 43 may also have adjustment means for adjusting the height of the solar panels 30.

In the method of mounting of solar panels 30 of the solar panel system advantageously the mounting work is done from the uppermost solar panel 30 downwards. Thus, for example at small sites the ladder is placed at the space reserved for the lower solar panel, whereby the placing and fastening of the upper panel is easy. After mounting the upper solar panel, the ladder is removed, and the lower solar panel can be placed and fastened from the ground level. At larger sites for example a cage hoisting device can be used. As the solar panels are at their places the fastening members 38, 39 are connected and fastened to the clamping groove 12 of the solar panel fixture element 10.

In the solar panel 30 positioning and fastening stage to the mounting grooves 20A, 20B the solar panels are placed at their corresponding support structure 16A, 16B of the solar panel fixture element 10 in a slightly angled position. When the upper end of the end side of the upper solar panel is placed to the corresponding mounting groove 20A or 20B of the solar panel fixture element 10 and the upper solar panel is turned to support of the corresponding upper support structure 15A or 15B of the solar panel fixture element 10. Thereafter the lower end of the end side of the lower solar panel 30 is placed to the corresponding mounting groove 20A or 20B of the solar panel fixture element 10 and turned to support of the corresponding upper support structure 15A, 15B of the solar panel fixture element 10.

To summarize the invention the solar panel fixture element of a solar panel system In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the inventive idea.

## Claims

1. A solar panel fixture element of a solar panel system, in which the solar panel fixture element (10) has a first fixing side (10A) and a second fixing side (10B),
the solar panel fixture element (10) comprises two parallelly extending two main elements (11A, 11B), which are located centrally spaced apart from each other,
between the centrally and parallelly extending two main elements (11A, 11B) is formed cross elements (13, 14, 23, 24), which extend between the first main element (11A) and the second main element (11B),
each fixing side (10A, 10B) is formed outwards from centrally and parallelly extending two main elements (11A, 11B),
the solar panel fixture element (10) has on each fixing side (10A, 10B) from the corresponding main element (11A, 11B) extending upper support elements (15A, 15B) and lower support elements (16A, 16B),
between the upper support element (15A, 15B) and corresponding lower support element (16A, 16B) a mounting groove (20A, 20B) of corresponding fixing side is formed,
**characterized in that** the lower support elements (16A, 16B) have a tightening protrusion (22A, 22B) at their outermost ends, which tightening protrusion (22A, 22B) extends upwards from the corresponding lower support elements (16A, 16B) and that the lower support elements (16A, 16B) are controllably bendable.

2. Solar panel fixture element of a solar panel system according to claim 1, **characterized in that** the main elements (11A, 11B) and the cross elements (13, 14, 23, 24) form a support and fastening frame structure for the solar panel fixture element (10).

3. Solar panel fixture element of a solar panel system according to claim 1 or 2, **characterized in that** the lower support elements (16A, 16B) are slightly inclined towards the upper support elements (15A, 15B) i.e. towards the mounting grooves (20A, 20B), advantageously 3-8 degrees, more advantageously about 5 degrees, and/or the upper support elements (15A, 15B) are slightly inclined towards the lower support elements (16A, 16B) i.e. towards the mounting grooves (20A, 20B), advantageously 0,5-2,5 degrees, more advantageously about 1,5 degrees.

4. Solar panel fixture element of a solar panel system according to any of claims 1 - 3, **characterized in that** the two upper cross elements (13, 14) are perpendicular to the main elements (11A, 11B) and form an opening (25) limited by the cross elements (13, 14) and the parts of the main elements (11A, 11B) extending between the cross elements (13, 14), which opening (25) is for a joint piece to connect two next to each other located solar panel fixture elements (10) to each other in longitudinal direction.

5. Solar panel fixture element of a solar panel system according to any of claims 1 - 4, **characterized in that** at one end of the main elements (11A, 11B) a clamping groove (12) of the solar panel fixture element (10) is formed.

6. Solar panel fixture element of a solar panel system according to claim 5, **characterized in that** the solar panel fixture element (10) comprises on each fixing side (10A, 10B) fastening legs (18A, 18B) extending from the main elements (11A, 11B) outwards and that the fastening legs (18A, 18B) have upward extending corner elements (17A, 17B).

7. Solar panel fixture element of a solar panel system according to any of claims 1 - 6, **characterized in that** the solar panel fixture element (10) is an extruded profile, advantageously an extruded metallic profile, more advantageously an extruded aluminum profile.

8. Solar panel fixture element of a solar panel system according to any of claims 1 - 7, **characterized in that** in the solar panel fixture element (10) the mounting groove (20A) on the first fixing side (10A) is differently dimensioned than the mounting groove (20B) on the second fixing side (10B),

9. Solar panel system comprising solar panels (30) and a support and fastening structure (35), **characterized in that**, the solar panel system comprises solar panel fixture elements (10) according to any of claims 1 - 8 and that the solar panels (30) are fastened to the support and fastening structure (35) by the solar panel fixture elements.

10. Method of mounting of solar panels (30) of a solar panel system, **characterized in that**, in method the solar panels (30) are fastened to a support and fastening structure (35) of the solar panel system by solar panel fixture elements (10) according to any of claims 1 - 8 and **that** in the method end sides of two next to each other located solar panels (30) are fastened to one solar panel fixture element (10) on the upper support structures (15A, 15B) correspondingly on the first fixing side (10A) and on the second fixing side (10B) and that the opposite end side of each solar panel (30) is fastened to another solar panel fixture elements (10) such, that the end sides of the solar panels (30) are supported by the lower support structures (16A, 16B) and fastened to the mounting groove (20A or 20B) on either fixing side (10A; 10B) depending on the thickness of the solar panel (30).
